(19) Europäisches Patentamt
European Patent Office
Office européen des brevets

(11) EP 4 354 754 A1

(12) **EUROPEAN PATENT APPLICATION**
published in accordance with Art. 153(4) EPC

(43) Date of publication:
17.04.2024 Bulletin 2024/16

(51) International Patent Classification (IPC):
H04B 7/0456 (2017.01)    H04B 7/0413 (2017.01)
G06N 3/02 (2006.01)

(21) Application number: 21945434.5

(52) Cooperative Patent Classification (CPC):
G06N 3/02; H04B 7/0413; H04B 7/0456

(22) Date of filing: 15.06.2021

(86) International application number:
PCT/CN2021/100213

(87) International publication number:
WO 2022/261842 (22.12.2022 Gazette 2022/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Beijing Xiaomi Mobile Software Co.,
Ltd.
Beijing 100085 (CN)

(72) Inventors:
• CHEN, Dong
Beijing 100085 (CN)
• CHI, Liangang
Beijing 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **PRECODING MATRIX DETERMINATION METHOD AND APPARATUS, USER EQUIPMENT, BASE STATION AND STORAGE MEDIUM**

(57) Provided are a precoding matrix determination method and apparatus, a user equipment, a base station, and a storage medium. The method comprises: receiving reception pilot information T from a user equipment (UE) and determining a pilot vector $T_2$ on the basis of the reception pilot information T (101); determining a channel matrix H on the basis of the pilot vector $T_2$ and determining a transformation matrix $H_P$ on the basis of the channel matrix H (102); and determining a precoding matrix W corresponding to the channel matrix H on the basis of the transformation matrix $H_P$ (103). The method provided can ensure the calculation performance of the precoding matrix in order to obtain a better precoding matrix, and is simple and has low complexity.

```
┌─────────────────────────────────────────────────────┐
│ Receive reception pilot information T from a UE, and  │──── 101
│ determine a pilot vector T₂ based on the reception    │
│ pilot information T                                    │
└─────────────────────────────────────────────────────┘
                         │
                         ▼
┌─────────────────────────────────────────────────────┐
│ Determine the channel matrix H based on the pilot     │──── 102
│ vector T₂, and determine a conversion matrix H_P      │
│ based on the channel matrix H                         │
└─────────────────────────────────────────────────────┘
                         │
                         ▼
┌─────────────────────────────────────────────────────┐
│ Determine the precoding matrix W corresponding to the │──── 103
│ channel matrix H based on the conversion matrix H_P   │
└─────────────────────────────────────────────────────┘
```

FIG. 1

EP 4 354 754 A1

**Description**

**TECHNICAL FIELD**

The present disclosure relates to the field of communication technology, and in particular to precoding matrix determination methods and apparatuses, a user equipment, a base station, and a storage medium.

**BACKGROUND**

In a multi-user multiple input multiple output (MU-MIMO) system, it is usually necessary to determine a precoding matrix, so that data to be transmitted can be preprocessed by the precoding matrix before being transmitted to a data receiver. Thus, the data transmission process can adapt to changes in channel state and improve the performance of data transmission.

In related technologies, a precoding matrix determination method mainly includes: a precoding matrix is determined based on a black box network or an unfolding network. Specifically, channel estimation is performed at a base station end to construct one or more training data sets, and then a black box network structure or an unfolding network structure that can learn a mapping relationship from channel state information to the precoding matrix is constructed at the base station end. Based on the training data sets, the black box network structure or the unfolding network structure is trained to obtain a trained network structure, and the precoding matrix is determined based on the trained network structure.

The method of determining the precoding matrix based on the black box network lacks interpretability, and has a poor mapping capability for nonlinear operations (for example, inverse operation), resulting in poor calculation effect. Moreover, explicit channel state information needs to be obtained, which affects the calculation performance of the precoding matrix. In addition, the network design in the method of determining the precoding matrix based on unfolding network is complex, and a deep learning training framework cannot be used, so the efficiency is low. In addition, the explicit channel state information also needs to be obtained, which affects the calculation performance of the precoding matrix.

**SUMMARY**

The present disclosure proposes precoding matrix determination methods and apparatuses, a user equipment, a base station, and a storage medium, in order to solve the technical problems of low calculation performance, poor calculation efficiency, and complex calculation manner for the precoding matrix in existing precoding matrix determination methods.

A precoding matrix determination method according to a first embodiment of the present disclosure is applied to a base station, and includes:

receiving reception pilot information T from a user equipment (UE), and determining a pilot vector $T_2$ based on the reception pilot information T;
determining a channel matrix H based on the pilot vector $T_2$, and determining a conversion matrix $H_P$ based on the channel matrix H; and
determining a precoding matrix W corresponding to the channel matrix H based on the conversion matrix $H_P$.

A precoding matrix determination method according to a second embodiment of the present disclosure is applied to a user equipment (UE), and includes:
determining transmission pilot information P based on pilot data s; and transmitting the transmission pilot information P to a base station.

A precoding matrix determination apparatus according to a third embodiment of the present disclosure includes:

a receiving module, configured to receive reception pilot information T from a user equipment (UE), and determine a pilot vector $T_2$ based on the reception pilot information T;
a first processing module, configured to determine a channel matrix H based on the pilot vector $T_2$, and determine a conversion matrix $H_P$ based on the channel matrix H; and
a second processing module, configured to determine a precoding matrix W corresponding to the channel matrix H based on the conversion matrix $H_P$.

A precoding matrix determination apparatus according to a fourth embodiment of the present disclosure includes:
a processing module, configured to determine transmission pilot information P based on pilot data s; and transmit the transmission pilot information P to a base station.

A user equipment (UE) according to a fifth embodiment of the present disclosure, including: a transceiver; a memory; and a processor, respectively connected to the transceiver and the memory, configured to control wireless signal transmission and reception of the transceiver by executing computer executable instructions on the memory, and capable of implementing the method according to the above second embodiment.

A base station according to a sixth embodiment of the present disclosure, including: a transceiver; a memory; and a processor, respectively connected to the transceiver and the memory, configured to control wireless signal transmission and reception of the transceiver by executing computer executable instructions on the memory, and capable of implementing the method according to the above first embodiment.

There is provided a computer storage medium in another embodiment of the present disclosure, where the computer storage medium stores computer executable instructions, after the computer executable instructions are executed by a processor, the above methods can be implemented.

To sum up, in the precoding matrix determination methods and apparatuses, a user equipment, a base station, and a storage medium provided in the embodiments of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the embodiments of the present disclosure, the mapping relationship between the pilot vector $T_2$ and the precoding matrix W is learned, and based on this mapping relationship, the precoding matrix W is determined based on the pilot vector $T_2$ by using an implicit channel estimation technology, which can ensure the precoding performance.

In addition, in the embodiments of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$, so that the determination of the precoding matrix has certain interpretability, the calculation performance is ensured, and a better precoding matrix can be obtained. In addition, the method in the embodiments of the present disclosure is concise and low in complexity.

In addition, in the embodiments of the present disclosure, when training the precoding matrix determination network, the second sub-network and the fourth sub-network are independently trained first, and then the precoding matrix determination network as a whole is trained. This ensures that each sub-network learns an optimal state of the entire network on a suboptimal basis, ensuring training accuracy.

For additional aspects and advantages of the present disclosure, a part of them will be set forth in the following description, and another part of them will be apparent according to the following description or be learned through putting the present disclosure into practice.

## BRIEF DESCRIPTION OF THE DRAWINGS

The above and/or additional aspects and advantages of the present disclosure will become apparent and readily understood according to the following description of the examples in conjunction with the accompanying drawings.

FIG. 1 is a flowchart of a precoding matrix determination method provided in an example of the present disclosure.

FIG. 2 is a schematic structural diagram of a second sub-network provided in an example of the present disclosure.

FIG. 3 is a schematic structural diagram of a third sub-network provided in an example of the present disclosure.

FIG. 4 is a schematic structural diagram of a fourth sub-network provided in an example of the present disclosure.

FIG. 5 is a flowchart of a precoding matrix determination method provided in another example of the present disclosure.

FIG. 6 is a flowchart of a precoding matrix determination method provided in yet another example of the present disclosure.

FIG. 7 is a flowchart of a precoding matrix determination method provided in yet another example of the present disclosure.

FIG. 8 is a schematic structural diagram of a precoding matrix determination apparatus provided in an example of the present disclosure.

FIG. 9 is a schematic structural diagram of a precoding matrix determination apparatus provided in another example of the present disclosure.

FIG. 10 is a block diagram of a user equipment (UE) provided in an example of the present disclosure.

FIG. 11 is a block diagram of a base station provided in an example of the present disclosure.

**DETAILED DESCRIPTION OF THE EMBODIMENTS**

Embodiments will be described in detail herein, with the examples thereof illustrated in the drawings. Where the following descriptions involve the drawings, like numerals in different drawings refer to like or similar elements unless otherwise indicated. The implementations described in the following examples do not represent all implementations consistent with the present disclosure. Rather, they are merely examples of apparatuses and methods consistent with some aspects of the present disclosure as detailed in the appended claims.

The terms used in the present disclosure are for the purpose of describing particular examples only, and are not intended to limit the present disclosure. Terms determined by "a" and "the" in their singular forms in the examples of the present disclosure and the appended claims are also intended to include their plural forms, unless clearly indicated otherwise in the context. It should also be understood that the term "and/or" as used in the description refers to and includes any and all possible combinations of one or more of the associated listed items.

It is to be understood that, although the terms "first", "second", "third", and the like may be adopted in the examples of the present disclosure to describe various information, the information should not be limited to these terms. These terms are only used to distinguish the information of the same type with each other. For example, without departing from the scope of the present disclosure, first information may be referred to as second information; and similarly, second information may also be referred to as first information. Depending on the context, the word "if' as used herein may be interpreted as "when", "upon", or "in response to determining".

The following describes in detail the examples of the present disclosure. Illustrations of the examples are illustrated in the accompanying drawings, with the same or similar reference numerals referring to the same or similar elements throughout. The examples, which are described below with reference to the accompanying drawings, are illustrated and are intended to explain the present disclosure, but should not be construed as a limitation of the present disclosure.

The precoding matrix determination methods and apparatuses, a user equipment (UE), a base station, and a storage medium provided in the present disclosure will be described in detail with reference to the accompanying drawings.

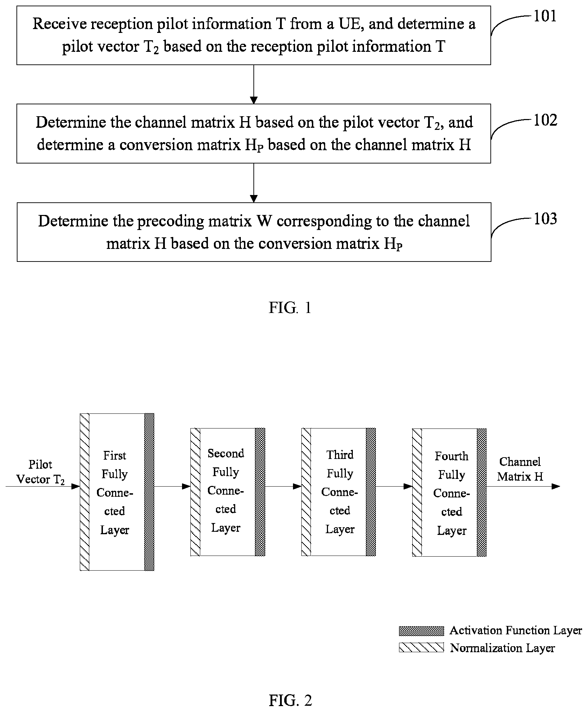

FIG. 1 is a flowchart of a precoding matrix determination method provided in an example of the present disclosure. The method is applied to a base station. As shown in FIG. 1, the precoding matrix determination method can include steps 101 to 103.

Step 101: reception pilot information T is received from a user equipment (UE), and a pilot vector $T_2$ is determined based on the reception pilot information T.

It should be noted that the method according to the example of the present disclosure can be applied to any UE. The UE can be a device that provides voice and/or data connectivity to a user. The UE can communicate with one or more core networks via a radio access network (RAN). The UE can be an Internet of Things (IoT) terminal, for example, a sensor device, a mobile phone (or a "cellular" phone), and a computer with an IoT terminal. For example, the UE can be a fixed, portable, pocket-sized, handheld, computer built-in, or vehicle-mounted device, for example, a station (STA), a subscriber unit, a subscriber station, a mobile, a remote station, an access point, a remote terminal, an access terminal, a user terminal, or a user agent. Or, the UE can also be a device for an unmanned aerial vehicle. Or, the UE can also be a vehicle-mounted device, for example, a driving computer with a wireless communication function, or a wireless terminal externally connected to a driving computer. Or, the UE can also be a roadside device, for example, a street lamp, a signal lamp or other roadside device with a wireless communication function.

In an example of the present disclosure, the reception pilot information T can be specifically obtained by transmission pilot information P via channel interference when transmitted to the base station. The transmission pilot information P is obtained by processing pilot data s by a first sub-network at the UE end.

Specifically, in an example of the present disclosure, the UE first obtains the pilot data s and processes the pilot data s by using the first sub-network to obtain the transmission pilot information P. Afterwards, the transmission pilot information P is transmitted to the base station, so that the base station can determine the precoding matrix based on the transmission pilot information P.

In an example of the present disclosure, the pilot data s can be pre-agreed by the base station and the UE at a same time-frequency resource. In an example of the present disclosure, the first sub-network at the UE end can specifically include P layers of fully connected layers. A dimension of a t-th fully connected layer in the first sub-network is $q_t \times 1$, and $q_{t+1} < q_t$, where P and $q_t$ are positive integers. A dimension of input information of a first fully connected layer of the first sub-network can be $2 \times K \times L \times 1$, where K is a number of UEs corresponding to the base station, and L is a pilot length. A dimension of input information of the last fully connected layer of the first sub-network can be $2 \times K \times L \times 1$.

Further, in an example of the present disclosure, when transmitted to the base station through a channel, the transmission pilot information P will be subject to channel interference, so that the information finally transmitted to the base station becomes the reception pilot information T. The reception pilot information T is related to interference information of the channel (for example, a channel matrix H), so that the base station can subsequently determine the channel matrix H based on the reception pilot information T. Furthermore, based on the channel matrix H, a precoding matrix W is determined, so that when transmitting data later, data to be transmitted will be preprocessed through the precoding matrix W. Thus the data transmission process can adapt to changes in channel state and improve the performance of data transmission.

In an example of the present disclosure, after receiving the reception pilot information T, the base station will first determine the pilot vector $T_2$ based on the reception pilot information, so that the channel matrix H can be determined based on the pilot vector $T_2$ later. Specifically, in an example of the present disclosure, $T_2$ = [Re(T), Im(T); Re(s), Im(s); Pu]; where Re($\cdot$) represents taking a real part, and Im($\cdot$) represents taking an imaginary part; $P_u$ represents an uplink signal-to-noise ratio.

In addition, it should be noted that, in an example of the present disclosure, the base station can correspond to a plurality of UEs. Each UE corresponds to pilot data s. Each UE can be configured to transmit the transmission pilot information P to the base station, so that the base station receives the reception pilot information T from each UE. Then, based on the reception pilot information T, the channel matrix H corresponding to the channel between each UE and the base station is determined.

Based on this, in an example of the present disclosure, a set of pilot data s corresponding to respective UEs is referred to as a pilot data set S, where $S = [s_1, s_2, \cdots, s_K] \in \mathbb{C}^{L \times K}$, K is the number of UEs, and $s_1, s_2, \cdots, s_K$ are orthogonal to each other.

Step 102: the channel matrix H is determined based on the pilot vector $T_2$, and a conversion matrix $H_P$ is determined based on the channel matrix H.

In an example of the present disclosure, determining the channel matrix H based on the pilot vector $T_2$ can include: inputting the pilot vector $T_2$ into a second sub-network to generate the channel matrix H. In an example of the present disclosure, the second sub-network can be a fully connected structure.

The reason why the channel matrix H can be determined based on the pilot vector $T_2$ by using the second sub-network with a fully connected structure in the present disclosure is explained below.

Specifically, the calculation formula of the channel matrix H in the minimum mean square error (MMSE) algorithm is:

$$H = TP(P^H P + \sigma_n^2 I)^{-1}$$

Based on the above formula, when the pilot data s corresponding to respective UEs are orthogonal, the transmission pilot information P of respective UEs will also be orthogonal to each other, and then $P^H P$ is a diagonal matrix. In this case, $(P^H P + \sigma_n^2 I)^{-1}$ is easy to calculate, so it can be considered that H and (Y; P) are linearly mapped. Therefore, the channel matrix H can be determined based on the pilot vector $T_2$ by using the second sub-network with a fully connected structure.

Further, in an example of the present disclosure, the second sub-network may include F layers of fully connected layers which are sequentially connected, where F is a positive integer; where a dimension of a t-th fully connected layer of the second sub-network is $l_t \times 1$, where $l_t$ is a positive integer, $l_1 \geq 2 \times M \times N + 2 \times K \times L + 1$, and $l_{t+1} < l_t$, where M is a number of antennas at the base station end, and N is a channel noise. In an example of the present disclosure, a dimension of input data of a first fully connected layer of the second sub-network can be $(2 \times M \times N + 2 \times K \times L + 1) \times 1$. A dimension of output data of the last fully connected layer of the second sub-network can be $2 \times M \times K \times 1$.

Further, it should be noted that, in an example of the present disclosure, the input of each fully connected layer of the second sub-network may have a normalization layer, and the output of each fully connected layer may have an activation function layer. In an example of the present disclosure, activation functions of activation function layers of the first fully connected layer and one or more intermediate fully connected layers of the second sub-network adopt a Rectified Linear Unit (ReLU) function:

$$\text{ReLU(x)} = \begin{cases} x, x \geq 0 \\ 0, x < 0 \end{cases}$$

The activation function of the activation function layer of the last fully connected layer of the second sub-network adopts a LeakyReLU function:

$$\text{LeakyReLU}(x) = \begin{cases} x, x \geq 0 \\ 0.3x, x < 0 \end{cases}$$

where X is input data of the t-th fully connected layer of the second sub-network.

In an example of the present disclosure, a fully connected operation in the second sub-network can be defined as:

$$y_i = \sum_j W_{i,j} x_i + b_i$$

where, $y_i$ is an i-th element output by the second sub-network, $W_{i,j}$ is an (i, j)-th element in a fully connected weight matrix of the second sub-network, $b_i$ is an i-th element in a fully connected bias of the second sub-network, and $x_i$ is an i-th element input by the second sub-network.

Based on the above description, as an example, FIG. 2 is a schematic structural diagram of a second sub-network provided in an example of the present disclosure. As shown in FIG. 2, the second sub-network includes four fully connected layers, where dimensions of the first fully connected layer, the second fully connected layer, the third fully connected layer, and the fourth fully connected layer are $l_1 \times 1$, $l_2 \times 1$, $l_3 \times 1$, and $l_4 \times 1$, respectively, where $l_1 \geq 2 \times M \times N + 2 \times K \times L + 1$, $l_1 > l_2 > l_3 > l_4$. Moreover, the input of each fully connected layer also has a normalization layer, and the output of each fully connected layer also has an activation function layer. Activation functions of activation function layers of the first fully connected layer, the second fully connected layer, and the third fully connected layer adopt a ReLU function, and the activation function of the activation function layer of the fourth fully connected layer adopts a LeakyReLU function.

From the above content, it can be seen that the channel matrix H can be generated based on the input pilot vector $T_2$ by adopting the second sub-network structure.

Further, in an example of the present disclosure, after generating the channel matrix H, the conversion matrix $H_P$ can be determined based on the channel matrix H, so as to generate the precoding matrix W based on the conversion matrix $H_P$ later.

In an example of the present disclosure, determining the conversion matrix $H_P$ based on the channel matrix H may include: inputting the channel matrix H into a third sub-network to generate the conversion matrix $H_P$, where the conversion matrix $H_P$=[$Z^H$H; $Z^+$H; H], where $Z = (HH^H + \rho I)$, $\rho$ is a reciprocal of a downlink signal-to-noise ratio, $Z^+ = Z \circ I$, and I is an identity matrix.

The reasons why the channel matrix H is converted into the conversion matrix $H_P$ is introduced as follows.

Specifically, in an example of the present disclosure, the calculation formula of the precoding matrix W in the MMSE algorithm is the following formula 1:

$$W = H^H (HH^H + \rho I)^{-1}$$

where $H \in \mathbb{C}^{K \times M}$. Moreover, since the above calculation formula of the preceding precoding matrix W contains an inverse operation, and the inverse operation is complicated, the relationship between W and H is a nonlinear mapping. Based on this, when directly using the channel matrix H to determine the precoding matrix W, it is necessary to use the nonlinear mapping, which will affect the calculation performance of the precoding matrix W.

On this basis, in order to avoid calculating the precoding matrix W through the nonlinear mapping, in an example of the present disclosure, $Z = (HH^H + \rho I)$, and since elements at a main diagonal of Z have larger values than elements at other positions, there is the following inverse approximation formula:

$$Z^{-1} \approx ZA + Z^+ B + C$$

where A, B, and C are all learnable parameters that can be trained by the third sub-network.

Based on the above formula 1 and the above inverse approximation formula, the calculation formula of the precoding matrix W can be converted into the following formula 2:

$$W = H^H Z^{-1} \approx H^H(ZA + Z^+ B + C) = H^H ZA + H^H Z^+ B + H^H C + D$$

Then there is the following formula 3:

$$W^H \approx A^H Z^H H + B^H Z^+ H + C^H H + D$$

where $A^H$, $B^H$, $C^H$, and D are learnable parameters that can be trained by the third sub-network.

Based on the above formula 3, it can be determined that the precoding matrix W and $[Z^H H; Z^+ H; H]$ are linearly mapped. That is, after determining $[Z^H H; Z^+ H; H]$, the precoding matrix W can be directly calculated by the linear mapping. Therefore, in an example of the present disclosure, after determining the channel matrix H, the channel matrix H will be converted into the conversion matrix $H_P$ by using the third sub-network, $H_P = [Z^H H; Z^+ H; H]$, so that the precoding matrix W can be linearly mapped based on the conversion matrix $H_P$ later, ensuring the calculation performance.

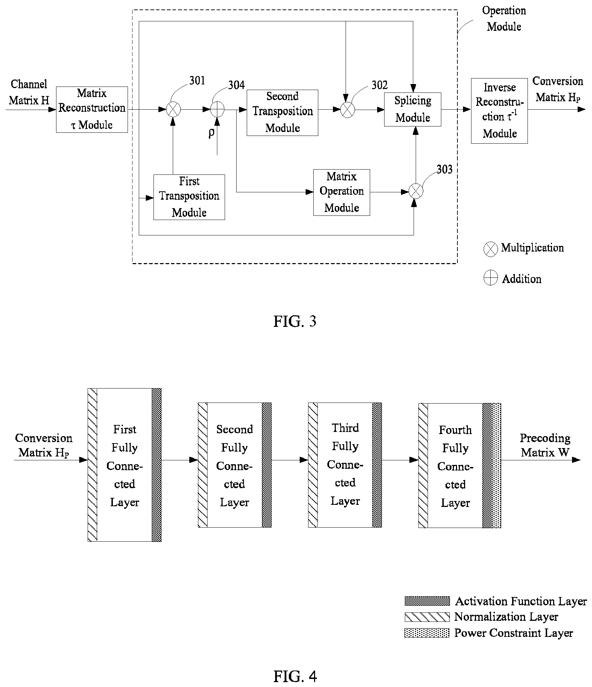

Further, FIG. 3 is a schematic structural diagram of a third sub-network provided in an example of the present disclosure. As shown in FIG. 3, the third sub-network can include a matrix reconstruction $\tau$ module, an operation module and an inverse reconstruction $\tau^{-1}$ module which are sequentially connected.

An input end of the matrix reconstruction module serves as an input end of the third sub-network, and an output end of the inverse reconstruction module serves as an output end of the third sub-network.

Referring further to FIG. 3, in an example of the present disclosure, the operation module may specifically include a first multiplication module 301, a second multiplication module 302, a third multiplication module 303, a first transposition module, a second transposition module, a splicing module, an addition module 304 and a matrix operation module.

An output end of the matrix reconstruction module is respectively connected to a first input end of the first multiplication module 301, an input end of the first transposition module, a first input end of the second multiplication module 302, a first input end of the third multiplication module 303, and a first input end of the splicing module.

A second input end of the first multiplication module 301 is connected to an output end of the first transposition module. An output end of the first multiplication module 301 is connected to an input end of the addition module 304. The addition module 304 is configured to perform an adding $\rho$ operation on input data and output. An output end of the addition module 304 is respectively connected to an input end of the second transposition module and an input end of the matrix operation module. The matrix operation module is configured to perform a matrix operation on input data and the identity matrix I and output. In an example of the present disclosure, the matrix operation module is configured to perform Hadamard product operation on the input data and the identity matrix I and output.

An output end of the second transposition module is connected to a second input end of the second multiplication module 302, and an output end of the second multiplication module 302 is connected to a second input end of the splicing module. An output end of the matrix operation module is connected to a second input end of the third multiplication module 303, and an output end of the third multiplication module 303 is connected to a third input end of the splicing module. An output end of the splicing module is connected to an input end of the inverse reconstruction module.

Referring to the above content and FIG. 3, it can be seen that when the channel matrix H passes through the third sub-network, the third sub-network will output the conversion matrix $H_P$.

Step 103: the precoding matrix W corresponding to the channel matrix H is determined based on the conversion matrix $H_P$.

In an example of the present disclosure, determining the precoding matrix W corresponding to the channel matrix H based on the conversion matrix $H_P$ can include:

inputting the conversion matrix $H_P$ into a fourth sub-network to generate the precoding matrix W, where

$$W = Z^{-1} H \approx (AZ + BZ^+ + C)H = AZH + BZ^+ H + CH + D$$

where A, B, C, and D are learnable parameters.

In an example of the present disclosure, referring to the above formulas, it can be obtained that based on the fact that $H_P \rightarrow W$ is a linear mapping, the fourth sub-network can be a fully connected structure, and the linear mapping from the conversion matrix $H_P$ to the precoding matrix W can be realized.

Specifically, in an example of the present disclosure, the fourth sub-network can include G layers of fully connected layers which are sequentially connected, where G is a positive integer; where a dimension of a t-th fully connected layer of the fourth sub-network is $f_t \times 1$, where $f_t$ is a positive integer, $f_1 > 3 \times 6 \times M \times K$, $f_{t+1} < f_t$. In an example of the present disclosure, a dimension of input data of a first fully connected layer of the fourth sub-network can be $6 \times M \times K$. A dimension of output information of the last fully connected layer of the fourth sub-network can be $2 \times M \times K$.

It should be noted that, in an example of the present disclosure, the input of each fully connected layer of the fourth sub-network may have a normalization layer, and the output of each fully connected layer may have an activation function layer. In an example of the present disclosure, activation functions of activation function layers of the first fully connected layer and one or more intermediate fully connected layers of the fourth sub-network adopt a ReLU function:

$$\mathrm{ReLU(x)} = \begin{cases} \mathrm{x}, \mathrm{x} \geq 0 \\ 0, \mathrm{x} < 0 \end{cases}$$

The activation function of the activation function layer of the last fully connected layer of the fourth sub-network adopts a Tanh function:

$$\mathrm{Tanh(x)} = \frac{e^{\mathrm{x}} - e^{-\mathrm{x}}}{e^{\mathrm{x}} + e^{-\mathrm{x}}}$$

where X is input data of the t-th fully connected layer of the fourth sub-network.

In an example of the present disclosure, a power constraint layer is also provided outside the activation function layer of the last fully connected layer in the fourth sub-network to ensure that the output precoding matrix can meet the transmission power constraint.

Based on the above description, as an example, FIG. 4 is a schematic structural diagram of a fourth sub-network provided in an example of the present disclosure. As shown in FIG. 4, the fourth sub-network includes four fully connected layers, where dimensions of the first fully connected layer, the second fully connected layer, the third fully connected layer, and the fourth fully connected layer are $f_1 \times 1, f_2 \times 1, f_3 \times 1, f_4 \times 1$, respectively, where $f_1 > 3 \times 6 \times M \times K, f_1 > f_2 > f_3 > f_4$. Moreover, the input of each fully connected layer also has a normalization layer, and the output of each fully connected layer also has an activation function layer. Activation functions of activation function layers of the first fully connected layer, the second fully connected layer, and the third fully connected layer of the fourth sub-network adopt a ReLU function, and the activation function of the activation function layer of the fourth fully connected layer adopts a LeakyReLU function. In addition, a power constraint layer is also provided outside the activation function layer of the fourth fully connected layer.

From the above content, it can be seen that the precoding matrix W can be generated based on the input conversion matrix $H_P$ by adopting the fourth sub-network structure.

To sum up, in the precoding matrix determination method provided in the examples of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the examples of the present disclosure, the mapping relationship between the pilot vector $T_2$ and the precoding matrix W is learned, and based on this mapping relationship, the precoding matrix W is determined based on the pilot vector $T_2$ by using an implicit channel estimation technology, which can ensure the precoding performance.

In addition, in the examples of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$, so that the determination of the precoding matrix has certain interpretability, the calculation performance is ensured, and a better precoding matrix can be obtained. In addition, the method in the examples of the present disclosure is concise and low in complexity.

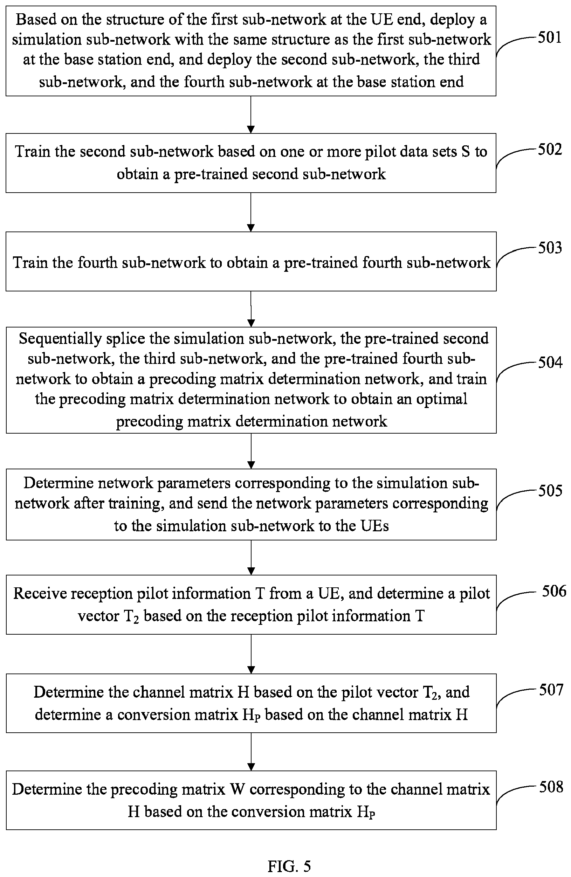

FIG. 5 is a flowchart of a precoding matrix determination method provided in another example of the present disclosure. The method is applied to a base station. As shown in FIG. 5, the method may include steps 501 to 508.

Step 501: based on the structure of the first sub-network at the UE end, a simulation sub-network with the same structure as the first sub-network is deployed at the base station end, and the second sub-network, the third sub-network, and the fourth sub-network are deployed at the base station end.

The specific structure of the simulation sub-network can be found in the related introduction of the first sub-network in the above examples, and the specific structures of the second sub-network, the third sub-network, and the fourth sub-network can also be found in the specific introduction in the above examples. The embodiment of the present disclosure will not be repeated herein.

Step 502: the second sub-network is trained based on one or more pilot data sets S to obtain a pre-trained second sub-network.

In an example of the present disclosure, the pilot data set $S = [s_1, s_2, \cdots, s_K] \in \mathbb{C}^{L \times K}$, where $s_K$ is pilot data of a K-th UE corresponding to the base station, and $s_1, s_2, \cdots, s_K$ are orthogonal to each other.

In an example of the present disclosure, training the second sub-network based on the pilot data sets S to obtain the pre-trained second sub-network can include steps a to d.

Step a: pilot data samples are obtained.

In an example of the present disclosure, N pilot data sets S can be obtained as the pilot data samples.

In an example of the present disclosure, for example, 8 antennas can be configured at the base station end, the base station corresponds to four UEs configured with a single antenna, and 100,000 pilot data sets S generated in a 2.4GHz outdoor pico cellular scenario can be used as the pilot data samples. The 100,000 pilot data samples can be divided into 90,000 training samples and 10,000 test samples.

Step b: a plurality of training data for training the second sub-network is determined based on the pilot data samples.

In an example of the present disclosure, the training data for training the second sub-network includes a pilot vector $T_2$. Furthermore, in an example of the present disclosure, determining the training data for training the second sub-network based on the pilot data samples can include: $T_{2K} = [\text{Re}(T_K), \text{Im}(T_K); \text{Re}(s_K), \text{Im}(s_K); P_u]$, $T_K = H_{2K}s_K + N_K$, where $T_{2K}$ is a pilot vector determined based on pilot data $s_K$ of a K-th UE corresponding to the base station, $H_{2K}$ is an actual channel matrix of a channel between the K-th UE and the base station, and $N_K$ is a channel noise of the channel between the K-th UE and the base station.

Step c: the plurality of training data for training the second sub-network is input into the second sub-network to obtain a predicted channel matrix $H_1$, and a loss function MSE is calculated based on the predicted channel matrix $H_1$ and an actual channel matrix $H_2$.

In an example of the present disclosure, the loss function MSE can be:

$$\text{MSE} = \frac{1}{2 \times M \times K} \|H_2 - H_1\|^2 = \frac{1}{64} \|H_2 - H_1\|^2$$

where $\|\cdot\|$ is a Euclidean norm.

Step d: parameters of the second sub-network are updated based on the loss function MSE.

The above steps a to d are repeated until a minimum loss function is calculated and the training is completed. For example, in an example of the present disclosure, the training times of the second sub-network can be set to 100.

In addition, in an example of the present disclosure, when training the second sub-network, network parameters are set as follows: Adam optimizer, initial learning rate of 0.01, dynamic learning rate change strategy, and saving a model strategy based on test sets.

Step 503: the fourth sub-network is trained to obtain a pre-trained fourth sub-network.

In an example of the present disclosure, training the fourth sub-network based on the pilot data sets S to obtain the pre-trained fourth sub-network can include steps 1 to 3.

Step 1: a conversion matrix $H_{pK}$ corresponding to the actual channel matrix of the channel between the K-th UE and the base station is obtained.

In an example of the present disclosure, the actual channel matrix $H_{2K}$ of the channel between the K-th UE and the base station is determined, and based on the actual channel matrix $H_{2K}$, the conversion matrix $H_{pK}$ corresponding to the actual channel matrix of the channel between the K-th UE and the base station is determined.

Step 2: the conversion matrix $H_{pK}$ is input into the fourth sub-network to generate a predicted precoding matrix $W_K$ corresponding to the channel between the K-th UE and the base station, and a loss function Loss is calculated based on the predicted precoding matrix $W_K$.

In an example of the present disclosure, the loss function Loss can be:

$$\text{Loss} = -\sum_{k=1}^{K} \ln\left(1 + \frac{\left|H_{2k}^H w_k\right|^2}{\sum_{p=1, p \neq k}^{K} \left|H_{2k}^H w_p\right|^2 + \sigma^2}\right)$$

where $\sigma^2$ is a power of the channel noise of the channel between the UE and the base station.

Step 3: parameters of the fourth sub-network are updated based on the loss function Loss.

The above steps 1 to 3 are repeated until a minimum loss function is calculated and the training is completed. For example, in an example of the present disclosure, the training times of the fourth sub-network can be set to 100.

In addition, in an example of the present disclosure, when training the fourth sub-network, network parameters are set as follows: Adam optimizer, initial learning rate of 0.01, dynamic learning rate change strategy, and saving a model strategy based on test sets.

It should be noted that the channel matrices mentioned in the examples of the present disclosure can all be considered as channel matrices corresponding to a perfect channel.

Step 504: the simulation sub-network, the pre-trained second sub-network, the third sub-network, and the pre-trained fourth sub-network are sequentially spliced to obtain a precoding matrix determination network, and the precoding matrix determination network is trained based on the pilot data sets S to obtain an optimal precoding matrix determination network.

In an example of the present disclosure, when training the precoding matrix determination network, network parameters are set as follows: Adam optimizer, initial learning rate of 0.01, dynamic learning rate change strategy, saving a model strategy based on test sets, a number of training iterations is 100, and the loss function is the above Loss function.

It should be noted that in the process of training the precoding matrix determination network, an input of the simulation sub-network is pilot data s and an output is transmission pilot information P. After that, the precoding matrix determination network will learn the process of "determining reception pilot information T based on the transmission pilot information P, and then determining a pilot vector $T_2$ based on the reception pilot information T" to obtain the pilot vector $T_2$, and input the pilot vector $T_2$ into the second sub-network for subsequent training steps.

In addition, it should be noted that in another example of the present disclosure, after obtaining the pilot data sets S, data $T_1$ can also be determined based on the pilot data sets S, where $T_1 = [\mathrm{Re}(S), \mathrm{Im}(S)] \in \mathbb{C}^{2KL}$. The data $T_1$ is taken as the input of the simulation sub-network, so that the simulation sub-network outputs the transmission pilot information P to train the precoding matrix determination network.

In an example of the present disclosure, the loss function of the obtained optimal precoding matrix determination network is the smallest, and the total rate sum of the corresponding K UE ends is the largest.

Step 505: network parameters corresponding to the simulation sub-network after training are determined, and the network parameters corresponding to the simulation sub-network are sent to the UEs.

In an example of the present disclosure, when the optimal precoding matrix determination network is determined, the network parameters corresponding to the simulation sub-network in the optimal precoding matrix determination network can be obtained, and the network parameters can be fed back to the UEs through feedback links, so that the UEs can adjust first sub-networks deployed at the UE ends based on the network parameters.

In an example of the present disclosure, after step 505, the optimal precoding matrix determination network can be tested, and then subsequent steps can be performed, that is, a precoding matrix is determined based on the optimal precoding matrix determination network.

Step 506: reception pilot information T is received from a UE, and a pilot vector $T_2$ is determined based on the reception pilot information T.

Step 507: a channel matrix H is determined based on the pilot vector $T_2$, and a conversion matrix $H_P$ is determined based on the channel matrix H.

Step 508: a precoding matrix W corresponding to the channel matrix H is determined based on the conversion matrix $H_P$.

The detailed introduction of steps 506 to 507 can refer to the description of the above examples, and the embodiment of the present disclosure will not be repeated herein.

To sum up, in the precoding matrix determination method provided in the examples of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the examples of the present disclosure, the mapping relationship between the pilot vector $T_2$ and the precoding matrix W is learned, and based on this mapping relationship, the precoding matrix W is determined based on the pilot vector $T_2$ by using an implicit channel estimation technology, which can ensure the precoding performance.

In addition, in the examples of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$, so that the determination of the precoding matrix has certain interpretability, the calculation performance is ensured, and a better precoding matrix can be obtained. In addition, the method in the examples of the present disclosure is concise and low in complexity.

In addition, in the examples of the present disclosure, when training the precoding matrix determination network, the second sub-network and the fourth sub-network are independently trained first, and then the precoding matrix determination network as a whole is trained. This ensures that each sub-network learns an optimal state of the entire network on a suboptimal basis, ensuring training accuracy.

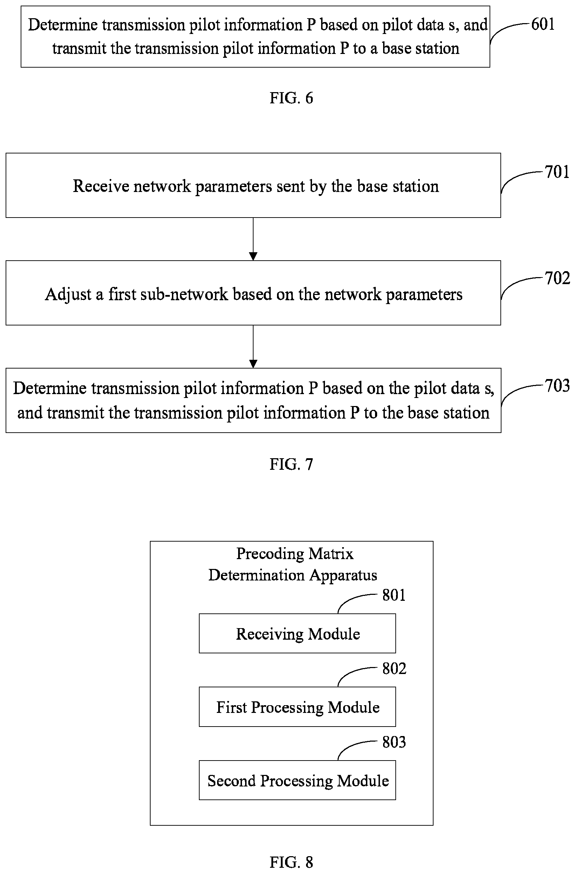

FIG. 6 is a flowchart of a precoding matrix determination method provided in another example of the present disclosure. The method is applied to a UE. As shown in FIG. 6, the precoding matrix determination method can include step 601.

Step 601: transmission pilot information P is determined based on pilot data s, and the transmission pilot information P is transmitted to a base station.

For the detailed introduction of step 601, please refer to the description of the above examples, and the embodiment of the present disclosure will not be repeated herein.

To sum up, in the precoding matrix determination method provided in the examples of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the examples of the present disclosure, the mapping relationship between the pilot vector $T_2$ and the precoding matrix W is learned, and based on this mapping relationship, the precoding matrix W is determined based on the pilot vector $T_2$ by using an implicit channel estimation technology, which can ensure the precoding performance.

In addition, in the examples of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$. Thus, the determination of the precoding matrix has certain interpretability, the calculation performance is ensured, and a better precoding matrix can be obtained. In addition, the method in the examples of the present disclosure is concise and low in complexity.

FIG. 7 is a flowchart of a precoding matrix determination method provided in yet another example of the present disclosure. The method is applied to a UE. As shown in FIG. 7, the precoding matrix determination method can include steps 701 to 703.

Step 701: network parameters sent by the base station are received.

Step 702. a first sub-network is adjusted based on the network parameters.

Step 703: transmission pilot information P is determined based on the pilot data s, and the transmission pilot information P is transmitted to the base station.

For the detailed introduction of steps 701-703, please refer to the description of the above examples, and the embodiment of the present disclosure will not be repeated herein.

To sum up, in the precoding matrix determination method provided in the examples of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the examples of the present disclosure, the mapping relationship between the pilot vector $T_2$ and the precoding matrix W is learned, and based on this mapping relationship, the precoding matrix W is determined based on the pilot vector $T_2$ by using an implicit channel estimation technology, which can ensure the precoding performance.

In addition, in the examples of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$. Thus, the determination of the precoding matrix has certain interpretability, the calculation performance is ensured, and a better precoding matrix can be obtained. In addition, the method in the examples of the present disclosure is concise and low in complexity.

FIG. 8 is a schematic structural diagram of a precoding matrix determination apparatus provided in an example of the present disclosure. As shown in FIG. 8, the apparatus can include:

> a receiving module 801, configured to receive reception pilot information T from a user equipment (UE), and determine a pilot vector $T_2$ based on the reception pilot information T;
> a first processing module 802, configured to determine a channel matrix H based on the pilot vector $T_2$, and determine a conversion matrix $H_P$ based on the channel matrix H; and
> a second processing module 803, configured to determine a precoding matrix W corresponding to the channel matrix H based on the conversion matrix $H_P$.

To sum up, in the precoding matrix determination apparatus provided in the examples of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the examples of the present disclosure, the mapping relationship between the

pilot vector $T_2$ and the precoding matrix W is learned, and based on this mapping relationship, the precoding matrix W is determined based on the pilot vector $T_2$ by using an implicit channel estimation technology, which can ensure the precoding performance.

In addition, in the examples of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$. Thus, the determination of the precoding matrix has certain interpretability, the calculation performance is ensured, and a better precoding matrix can be obtained. In addition, the method in the examples of the present disclosure is concise and low in complexity.

In an example of the present disclosure, the reception pilot information T is obtained by transmission pilot information P via channel interference when transmitted to the base station, and the transmission pilot information P is obtained by processing pilot data s by a first sub-network at the UE;

and

$$T_2 = [\mathrm{Re}(T), \mathrm{Im}(T); \mathrm{Re}(s), \mathrm{Im}(s); P_u];$$

where $\mathrm{Re}(\cdot)$ represents taking a real part, and $\mathrm{Im}(\cdot)$ represents taking an imaginary part; $P_u$ represents an uplink signal-to-noise ratio.

In an example of the present disclosure, the pilot data s is pre-agreed by the base station and the UE at a same time-frequency resource.

In an example of the present disclosure, the receiving module is further configured to:

input the pilot vector $T_2$ into a second sub-network to generate the channel matrix H.

In an example of the present disclosure, the second sub-network is a fully connected structure;

the second sub-network includes F layers of fully connected layers which are sequentially connected, where F is a positive integer; where a dimension of a t-th fully connected layer of the second sub-network is $l_t \times 1$, where $l_t$ is a positive integer, $l_1 \geq 2 \times M \times N + 2 \times K \times L + 1$, and $l_{t+1} < l_t$, where M is a number of antennas at the base station, K is a number of UEs corresponding to the base station, L is a pilot length, and N is a channel noise.

In an example of the present disclosure, a fully connected operation in the second sub-network is defined as:

$$y_i = \sum_j W_{i,j} x_i + b_i;$$

where, $y_i$ is an i-th element output by the second sub-network, $W_{i,j}$ is an (i, j)-th element in a fully connected weight matrix of the second sub-network, $b_i$ is an i-th element in a fully connected bias of the second sub-network, and $x_i$ is an i-th element input by the second sub-network.

In an example of the present disclosure, the first processing module is further configured to:

input the channel matrix H into a third sub-network to generate the conversion matrix $H_P$, where the conversion matrix $H_P = [Z^H H; Z^+ H; H]$, where $Z = (HH^H + \rho I)$, $\rho$ is a reciprocal of a downlink signal-to-noise ratio, $Z^+ = Z \circ I$, and I is an identity matrix.

In an example of the present disclosure, the third sub-network includes a matrix reconstruction module, an operation module and an inverse reconstruction module which are sequentially connected.

Where an input end of the matrix reconstruction module serves as an input end of the third sub-network, and an output end of the inverse reconstruction module serves as an output end of the third sub-network.

In an example of the present disclosure, the operation module includes: a first multiplication module, a second multiplication module, a third multiplication module, a first transposition module, a second transposition module, a splicing module, an addition module and a matrix operation module.

Where an output end of the matrix reconstruction module is respectively connected to a first input end of the first multiplication module, an input end of the first transposition module, a first input end of the second multiplication module, a first input end of the third multiplication module, and a first input end of the splicing module.

A second input end of the first multiplication module is connected to an output end of the first transposition module, and an output end of the first multiplication module is connected to an input end of the addition module. Where the addition module is configured to perform an adding $\rho$ operation on input data and output. An output end of the addition module is respectively connected to an input end of the second transposition module and an input end of the matrix operation module. Where the matrix operation module is configured to perform a matrix operation on input data and the identity matrix I and output.

An output end of the second transposition module is connected to a second input end of the second multiplication module, and an output end of the second multiplication module is connected to a second input end of the splicing module.

An output end of the matrix operation module is connected to a second input end of the third multiplication module, and an output end of the third multiplication module is connected to a third input end of the splicing module. An output end of the splicing module is connected to an input end of the inverse reconstruction module.

In an example of the present disclosure, the second processing module is furhter configured to:

input the conversion matrix $H_P$ into a fourth sub-network to generate the precoding matrix W, where

$$W = Z^{-1}H \approx (AZ + BZ^+ + C)H = AZH + BZ^+H + CH + D$$

where A, B, C and D are learnable parameters.

In an example of the present disclosure, the fourth sub-network is a fully connected structure; the fourth sub-network includes G layers of fully connected layers which are sequentially connected, where G is a positive integer; where a dimension of a t-th fully connected layer of the fourth sub-network is $f_t \times 1$, where $f_t$ is a positive integer, $f_1 > 3 \times 6 \times M \times K$, and $f_{t+1} < f_t$.

In an example of the present disclosure, the apparatus is further configured to:

train the second sub-network based on one or more pilot data sets S to obtain a pre-trained second sub-network; where $S = [s_1, s_2, \cdots, s_K] \in \mathbb{C}^{L \times K}$, where $s_K$ is pilot data corresponding to a K-th UE, and $s_1$, $s_2$, $\cdots$ , $s_K$ are orthogonal to each other.

In an example of the present disclosure, the apparatus is further configured to: train the fourth sub-network to obtain a pre-trained fourth sub-network.

In an example of the present disclosure, the apparatus is further configured to: deploy a simulation sub-network at the base station based on a structure of a first sub-network.

In an example of the present disclosure, the apparatus is further configured to:

sequentially connect the simulation sub-network, the pre-trained second sub-network, the third sub-network and the pre-trained fourth sub-network to obtain a precoding matrix determination network; and train the precoding matrix determination network.

In an example of the present disclosure, the apparatus is further configured to:

determine network parameters corresponding to the simulation sub-network after training; and send the network parameters to the UE.

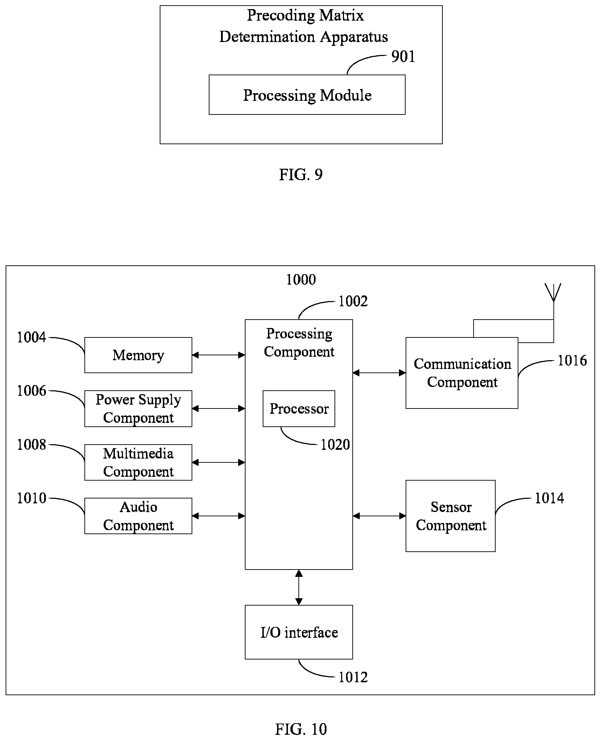

FIG. 9 is a schematic structural diagram of a precoding matrix determination apparatus provided in another example of the present disclosure. As shown in FIG. 9, the apparatus can include:

a processing module, configured to determine transmission pilot information P based on pilot data s; and transmit the transmission pilot information P to a base station.

To sum up, in the precoding matrix determination apparatus provided in the examples of the present disclosure, the base station will first receive the reception pilot information T from the UE, and determine the pilot vector $T_2$ based on the reception pilot information T. Then, the channel matrix H is determined based on the pilot vector $T_2$. Finally, the conversion matrix $H_P$ is determined based on the channel matrix H, and the precoding matrix W is determined based on the conversion matrix $H_P$. That is, in the examples of the present disclosure, the mapping relationship between the pilot vector $T_2$ and the precoding matrix W is learned. Based on this mapping relationship, the precoding matrix W is determined based on the pilot vector $T_2$ by using an implicit channel estimation technology, which can ensure the precoding performance.

In addition, in the examples of the present disclosure, the precoding matrix W is not directly determined based on the channel matrix H. Instead, the conversion matrix $H_P$ which is more informative and linearly mapped with the precoding matrix W is first determined based on the channel matrix H, and then the precoding matrix H is linearly mapped based on the conversion matrix $H_P$ . Thus, the determination of the precoding matrix has certain interpretability, the calculation performance is ensured, and a better precoding matrix can be obtained. In addition, the method in the examples of the present disclosure is concise and low in complexity.

In an example of the present disclosure, the processing module is further configured to:

input the pilot data s to a first sub-network to output the transmission pilot information P; where the pilot data s is pre-agreed by the base station and the UE at a same time-frequency resource.

In an example of the present disclosure, the first sub-network is a fully connected structure;

the first sub-network includes P layers of fully connected layers, where P is a positive integer; where a dimension of a t-th fully connected layer of the first sub-network is $q_t \times 1$, where $q_t$ is a positive integer, and $q_{t+1} < q_t$.

In an example of the present disclosure, the apparatus is further configured to:

receive network parameters sent by the base station;

adjust the first sub-network based on the network parameters sent by the base station.

A computer storage medium provided in an example of the present disclosure stores an executable program. After the executable program is executed by a processor, any method shown in FIG. 1, or FIG. 5, or FIG. 6, or FIG. 7 can be implemented.

In order to implement the above examples, the present disclosure also provides a computer program product, including a computer program that implements any method shown in either FIG. 1, or FIG. 5, or FIG. 6, or FIG. 7 when executed by a processor.

In addition, in order to implement the above examples, the present disclosure also provides a computer program that, when executed by a processor, implements any method shown in FIG. 1, or FIG. 5, or FIG. 6, or FIG. 7.

FIG. 10 is a block diagram of a UE 1000 provided by an example of the present disclosure. For example, the UE 1000 may be a mobile phone, a computer, a digital broadcasting terminal equipment, a messaging device, a game console, a tablet device, a medical device, a fitness device, a personal digital assistant, and the like.

By referring to FIG. 10, the UE 1000 may include one or more of the following components: a processing component 1002, a memory 1004, a power supply component 1006, a multimedia component 1008, an audio component 1010, an input/output (I/O) interface 1012, a sensor component 1013, and a communication component 1016.

The processing component 1002 generally controls the overall operations of the UE 1000, such as operations associated with display, phone calls, data communications, camera operations, and recording operations. The processing component 1002 may include at least one processor 1020 to execute instructions to complete all or a part of the steps of the above methods. In addition, the processing component 1002 may include at least one module which facilitates the interaction between the processing component 1002 and other components. For example, the processing component 1002 may include a multimedia module to facilitate the interaction between the multimedia component 1008 and the processing component 1002.

The memory 1004 is configured to store various types of data to support the operations of the UE 1000. Examples of such data include instructions for any application or method operated on the UE 1000, contact data, phonebook data, messages, pictures, videos, and the like. The memory 1004 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 1006 provides power for various components of the UE 1000. The power supply component 1006 may include a power management system, at least one power supply, and other components associated with generating, managing, and distributing power for the UE 1000.

The multimedia component 1008 includes a screen providing an output interface between the UE 1000 and a user. In some examples, the screen may include a liquid crystal display (LCD) and a touch panel (TP). If the screen includes the TP, the screen may be implemented as a touch screen to receive input signals from the user. The TP may include at least one touch sensor to sense touches, swipes, and gestures on the TP. The touch sensor may not only sense a boundary of a touch or swipe, but also sense a lasting time and a pressure associated with the touch or swipe. In some examples, the multimedia component 1008 includes a front camera and/or a rear camera. The front camera and/or rear camera may receive external multimedia data when the UE 1000 is in an operating mode, such as a photographing mode or a video mode. Each front camera and rear camera may be a fixed optical lens system or have focal length and optical zooming capability.

The audio component 1010 is configured to output and/or input an audio signal. For example, the audio component 1010 includes a microphone (MIC) that is configured to receive an external audio signal when the UE 1000 is in an operating mode, such as a call mode, a recording mode, and a voice recognition mode. The received audio signal may be further stored in memory 1004 or transmitted via communication component 1016. In some examples, the audio component 1010 also includes a speaker for outputting an audio signal.

The I/O interface 1012 provides an interface between the processing component 1002 and a peripheral interface module. The above peripheral interface module may be a keyboard, a click wheel, buttons, or the like. These buttons may include but not limited to a home button, a volume button, a start button and a lock button.

The sensor component 1013 includes at least one sensor to provide the UE 1000 with status assessments in various aspects. For example, the sensor component 1013 may detect an open/closed state of the UE 1000 and a relative positioning of components such as a display and a keypad of the UE 1000. The sensor component 1013 may also detect a change in position of the UE 1000 or a component of the UE 1000, the presence or absence of user contact with the UE 1000, orientation or acceleration/deceleration of the UE 1000, and temperature change of the UE 1000. The sensor component 1013 may include a proximity sensor configured to detect the presence of a nearby object without any physical contact. The sensor component 1013 may further include an optical sensor, such as a complementary metal-oxide-semiconductor (CMOS) or charged coupled device (CCD) image sensor which is used in imaging applications. In some examples, the sensor component 1013 may also include an acceleration sensor, a gyro sensor, a magnetic sensor, a pressure sensor, or a temperature sensor.

The communication component 1016 is configured to facilitate wired or wireless communication between the UE 1000 and other devices. The UE 1000 may access a wireless network based on a communication standard, such as WiFi, 2G or 3G, or a combination thereof. In an example, the communication component 1016 receives broadcast signals or broadcast related information from an external broadcast management system via a broadcast channel. In an example, the communication component 1016 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth® (BT) technology and other technologies.

In one or more examples, the UE 1000 may be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic component for performing the above methods.

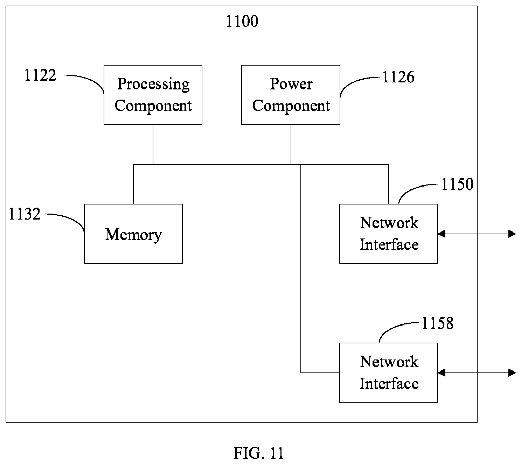

FIG. 11 is a block diagram of a base station 1100 provided in an example of the present disclosure. For example, the base station 1100 can be provided as a base station. Referring to FIG. 11, the base station 1100 includes a processing component 1126, which further includes at least one processor and memory resources represented by a memory 1132 for storing instructions, such as an application program, that can be executed by the processing component 1122. The application program stored in the memory 1132 may include one or more modules, each of which corresponds to a set of instructions. In addition, the processing component 1126 is configured to execute instructions to perform any of the above methods applied to the base station, such as the method shown in FIG. 1.

The base station 1100 may also include a power component 1126 configured to perform power management of base station 1100, a wired or wireless network interface 1150 configured to connect the base station 1100 to a network, and an input output (I/O) interface 1158. The base station 1100 can operate based on an operating system stored in the memory 1132, such as Windows Server TM, Mac OS XTM, Unix TM, Linux TM, Free BSDTM, or the like.

Other implementations of the present disclosure will be readily apparent to those skilled in the art after implementing the disclosure by referring to the specification. The present disclosure is intended to cover any variations, uses, or adaptations of the present disclosure that are in accordance with the general principles thereof and include common general knowledge or conventional technical means in the art that are not disclosed in the present disclosure. The description and the examples are only illustrative, and the scope and spirit of the present disclosure are to be indicated by appended claims.

It should be understood that the present disclosure is not limited to the above-described accurate structures illustrated in the drawings, and various modifications and changes can be made to the present disclosure without departing from the scope thereof. The scope of the present disclosure is to be limited only by the appended claims.

**Claims**

1. A precoding matrix determination method, applied to a base station, the method comprising:

   receiving reception pilot information T from a user equipment (UE), and determining a pilot vector $T_2$ based on the reception pilot information T;
   determining a channel matrix H based on the pilot vector $T_2$, and determining a conversion matrix $H_P$ based on the channel matrix H; and
   determining a precoding matrix W corresponding to the channel matrix H based on the conversion matrix $H_P$.

2. The method according to claim 1, wherein the reception pilot information T is obtained by transmission pilot information P via channel interference when transmitted to the base station, and the transmission pilot information P is obtained by processing pilot data s by a first sub-network at the UE;

determining the pilot vector $T_2$ based on the reception pilot information T comprising:

$$T_2 = [\mathrm{Re}(T), \mathrm{Im}(T); \mathrm{Re}(s), \mathrm{Im}(s); P_u];$$

wherein $\mathrm{Re}(\cdot)$ represents taking a real part, and $\mathrm{Im}(\cdot)$ represents taking an imaginary part; $P_u$ represents an uplink signal-to-noise ratio.

3. The method according to claim 2, wherein the pilot data s is pre-agreed by the base station and the UE at a same time-frequency resource.

4. The method according to claim 1, wherein determining the channel matrix H based on the pilot vector $T_2$ comprises: inputting the pilot vector $T_2$ into a second sub-network to generate the channel matrix H.

5. The method according to claim 4, wherein the second sub-network is a fully connected structure; the second sub-network comprises F layers of fully connected layers which are sequentially connected, wherein F is a positive integer; wherein a dimension of a t-th fully connected layer of the second sub-network is $l_t \times 1$, wherein $l_t$ is a positive integer, $l_1 \geq 2 \times M \times N + 2 \times K \times L + 1$, and $l_{t+1} < l_t$, wherein M is a number of antennas at the base station, K is a number of UEs corresponding to the base station, L is a pilot length, and N is a channel noise.

6. The method according to claim 4, wherein a fully connected operation in the second sub-network is defined as:

$$y_i = \sum_j W_{i,j} x_i + b_i;$$

wherein, $y_i$ is an i-th element output by the second sub-network, $W_{i,j}$ is an (i, j)-th element in a fully connected weight matrix of the second sub-network, $b_i$ is an i-th element in a fully connected bias of the second sub-network, and $x_i$ is an i-th element input by the second sub-network.

7. The method according to claim 4, wherein determining the conversion matrix $H_P$ based on the channel matrix H comprises: inputting the channel matrix H into a third sub-network to generate the conversion matrix $H_P$, wherein the conversion matrix $H_P=[Z^H H; Z^+ H; H]$, wherein $Z = (HH^H + \rho I)$, $\rho$ is a reciprocal of a downlink signal-to-noise ratio, $Z^+ = Z \circ I$, and I is an identity matrix.

8. The method according to claim 7, wherein the third sub-network comprises a matrix reconstruction module, an operation module and an inverse reconstruction module which are sequentially connected; wherein an input end of the matrix reconstruction module serves as an input end of the third sub-network, and an output end of the inverse reconstruction module serves as an output end of the third sub-network.

9. The method according to claim 8, wherein the operation module comprises: a first multiplication module, a second multiplication module, a third multiplication module, a first transposition module, a second transposition module, a splicing module, an addition module and a matrix operation module;

wherein an output end of the matrix reconstruction module is respectively connected to a first input end of the first multiplication module, an input end of the first transposition module, a first input end of the second multiplication module, a first input end of the third multiplication module, and a first input end of the splicing module; a second input end of the first multiplication module is connected to an output end of the first transposition module; an output end of the first multiplication module is connected to an input end of the addition module, wherein the addition module is configured to perform an adding $\rho$ operation on input data and output; an output end of the addition module is respectively connected to an input end of the second transposition module and an input end of the matrix operation module, wherein the matrix operation module is configured to perform a matrix operation on input data and the identity matrix I and output; and an output end of the second transposition module is connected to a second input end of the second multiplication module, and an output end of the second multiplication module is connected to a second input end of the splicing module; an output end of the matrix operation module is connected to a second input end of the third multiplication module, and an output end of the third multiplication module is connected to a third input end of the splicing module; an output end of the splicing module is connected to an input end of the inverse reconstruction module.

10. The method according to claim 7, wherein determining the precoding matrix W corresponding to the channel matrix H based on the conversion matrix $H_P$ comprises:

inputting the conversion matrix $H_P$ into a fourth sub-network to generate the precoding matrix W, wherein

$$W = Z^{-1}H \approx (AZ + BZ^+ + C)H = AZH + BZ^+H + CH + D$$

wherein A, B, C and D are learnable parameters.

11. The method according to claim 10, wherein the fourth sub-network is a fully connected structure; the fourth sub-network comprises G layers of fully connected layers which are sequentially connected, wherein G is a positive integer; wherein a dimension of a t-th fully connected layer of the fourth sub-network is $f_t \times 1$, wherein $f_t$ is a positive integer, $f_1 > 3 \times 6 \times M \times K$, and $f_{t+1} < f_t$.

12. The method according to claim 10, further comprising:

training the second sub-network based on one or more pilot data sets S to obtain a pre-trained second sub-network;
wherein $S = [s_1, s_2, \cdots, s_K] \in \mathbb{C}^{L \times K}$, wherein $s_K$ is pilot data corresponding to a K-th UE, and $s_1$, $s_2$, $\cdots$, $s_K$ are orthogonal to each other.

13. The method according to claim 12, further comprising:
training the fourth sub-network to obtain a pre-trained fourth sub-network.

14. The method according to claim 13, further comprising:
deploying a simulation sub-network at the base station based on a structure of a first sub-network, wherein a structure of the simulation sub-network is the same as the structure of the first sub-network.

15. The method according to claim 14, further comprising:

sequentially connecting the simulation sub-network, the pre-trained second sub-network, the third sub-network and the pre-trained fourth sub-network to obtain a precoding matrix determination network; and
training the precoding matrix determination network.

16. The method according to claim 15, further comprising:

determining network parameters corresponding to the simulation sub-network after training; and
sending the network parameters to the UE.

17. A precoding matrix determination method, applied to a user equipment (UE), the method comprising:

determining transmission pilot information P based on pilot data s; and
transmitting the transmission pilot information P to a base station.

18. The method according to claim 17, wherein determining the transmission pilot information P based on the pilot data s comprises:
inputting the pilot data s to a first sub-network to output the transmission pilot information P; wherein the pilot data s is pre-agreed by the base station and the UE at a same time-frequency resource.

19. The method according to claim 17, wherein the first sub-network is a fully connected structure; and
the first sub-network comprises P layers of fully connected layers, wherein P is a positive integer; wherein a dimension of a t-th fully connected layer of the first sub-network is $q_t \times 1$, wherein $q_t$ is a positive integer, and $q_{t+1} < q_t$.

20. The method according to claim 17, further comprising:

receiving network parameters sent by the base station; and
adjusting the first sub-network based on the network parameters sent by the base station.

21. A precoding matrix determination apparatus, comprising:

a receiving module, configured to receive reception pilot information T from a user equipment (UE), and determine a pilot vector $T_2$ based on the reception pilot information T;
a first processing module, configured to determine a channel matrix H based on the pilot vector $T_2$, and determine a conversion matrix $H_P$ based on the channel matrix H; and
a second processing module, configured to determine a precoding matrix W corresponding to the channel matrix H based on the conversion matrix $H_P$.

22. A precoding matrix determination apparatus, comprising:
a processing module, configured to determine transmission pilot information P based on pilot data s; and transmit the transmission pilot information P to a base station.

23. A user equipment (UE), comprising:

a transceiver;
a memory; and
a processor, respectively connected to the transceiver and the memory, configured to control wireless signal transmission and reception of the transceiver by executing computer executable instructions on the memory, and capable of implementing the method according to any one of claims 17 to 20.

24. A base station, comprising:

a transceiver;
a memory; and
a processor, respectively connected to the transceiver and the memory, configured to control wireless signal transmission and reception of the transceiver by executing computer executable instructions on the memory, and capable of implementing the method according to any one of claims 1 to 16.

25. A computer storage medium storing computer executable instructions, wherein after the computer executable instructions are executed by a processor, the method according to any one of claims 1 to 16 or 17 to 20 is implemented.

Receive reception pilot information T from a UE, and determine a pilot vector $T_2$ based on the reception pilot information T ⟋⎯101

Determine the channel matrix H based on the pilot vector $T_2$, and determine a conversion matrix $H_P$ based on the channel matrix H ⟋⎯102

Determine the precoding matrix W corresponding to the channel matrix H based on the conversion matrix $H_P$ ⟋⎯103

FIG. 1

Pilot Vector $T_2$ → First Fully Connected Layer → Second Fully Connected Layer → Third Fully Connected Layer → Fourth Fully Connected Layer → Channel Matrix H

▓▓▓▓▓ Activation Function Layer
⦦⦦⦦⦦ Normalization Layer

FIG. 2

FIG. 3

FIG. 4

| Based on the structure of the first sub-network at the UE end, deploy a simulation sub-network with the same structure as the first sub-network at the base station end, and deploy the second sub-network, the third sub-network, and the fourth sub-network at the base station end | 501 |

| Train the second sub-network based on one or more pilot data sets S to obtain a pre-trained second sub-network | 502 |

| Train the fourth sub-network to obtain a pre-trained fourth sub-network | 503 |

| Sequentially splice the simulation sub-network, the pre-trained second sub-network, the third sub-network, and the pre-trained fourth sub-network to obtain a precoding matrix determination network, and train the precoding matrix determination network to obtain an optimal precoding matrix determination network | 504 |

| Determine network parameters corresponding to the simulation sub-network after training, and send the network parameters corresponding to the simulation sub-network to the UEs | 505 |

| Receive reception pilot information T from a UE, and determine a pilot vector $T_2$ based on the reception pilot information T | 506 |

| Determine the channel matrix H based on the pilot vector $T_2$, and determine a conversion matrix $H_P$ based on the channel matrix H | 507 |

| Determine the precoding matrix W corresponding to the channel matrix H based on the conversion matrix $H_P$ | 508 |

FIG. 5

Determine transmission pilot information P based on pilot data s, and transmit the transmission pilot information P to a base station — 601

FIG. 6

Receive network parameters sent by the base station — 701

Adjust a first sub-network based on the network parameters — 702

Determine transmission pilot information P based on the pilot data s, and transmit the transmission pilot information P to the base station — 703

FIG. 7

Precoding Matrix Determination Apparatus

Receiving Module — 801

First Processing Module — 802

Second Processing Module — 803

FIG. 8

Precoding Matrix
Determination Apparatus

—— 901

Processing Module

FIG. 9

1000

—— 1002

1004 —— Memory

Processing
Component

Communication
Component —— 1016

1006 —— Power Supply
Component

Processor

1008 —— Multimedia
Component

—— 1020

1010 —— Audio
Component

Sensor
Component —— 1014

I/O interface

—— 1012

FIG. 10

1100

1122 — Processing Component    Power Component — 1126

1132 — Memory    Network Interface — 1150

Network Interface — 1158

FIG. 11

<div align="center">

**INTERNATIONAL SEARCH REPORT**

</div>

| International application No. |
| --- |
| **PCT/CN2021/100213** |

**A.  CLASSIFICATION OF SUBJECT MATTER**

H04B 7/0456(2017.01)i;  H04B 7/0413(2017.01)i;  G06N 3/02(2006.01)i

According to International Patent Classification (IPC) or to both national classification and IPC

**B.  FIELDS SEARCHED**

Minimum documentation searched (classification system followed by classification symbols)

H04B; H04L; H04W; G06N

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; 3GPP; CNKI; IEEE; 百度学术, BAIDU SCHOLAR: 多输入多输出, 预编码, 矩阵, 导频, 训练 3d 序列, 神经网络, 深度学习, 全连接, 线性, 变换, MIMO, precod+, matri+, pilot, train+ 3d sequenc +, neural network, deep learn+, FCN, linear+, transform+

**C.  DOCUMENTS CONSIDERED TO BE RELEVANT**

| Category* | Citation of document, with indication, where appropriate, of the relevant passages | Relevant to claim No. |
| --- | --- | --- |
| X | M.ATTIAH Kareem et al. "Deep Learning Approach to Channel Sensing and Hybrid Precoding for TDD Massive MIMO Systems" *2020 IEEE Globecom Workshops,* 05 March 2021 (2021-03-05), sections I-III | 17-20, 22-23, 25 |
| X | 王森 (WANG, Sen). "基于深度学习的毫米波信道估计与预编码研究 (Research on Millimeter Wave Channel Estimation and Precoding Based on Deep Learning)" 中国优秀硕士学位论文全文数据库 *(China Master's Theses Full-text Database),* 31 January 2021 (2021-01-31), chapter 5 | 17-20, 22-23, 25 |
| A | CN 111092641 A (CHONGQING UNIVERSITY OF POSTS AND TELECOMMUNICATIONS) 01 May 2020 (2020-05-01) entire document | 1-25 |
| A | CN 107769895 A (POTEVIO INFORMATION TECHNOLOGY CO., LTD.) 06 March 2018 (2018-03-06) entire document | 1-25 |
| A | CN 107332598 A (ZHEJIANG SCI-TECH UNIVERSITY) 07 November 2017 (2017-11-07) entire document | 1-25 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 November 2021** | **07 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/100213** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2021084343 A1 (TELEFONAKTIEBOLAGET LM ERICSSON (PUBL)) 06 May 2021 (2021-05-06)<br>      entire document | 1-25 |

Form PCT/ISA/210 (second sheet) (January 2015)

INTERNATIONAL SEARCH REPORT
Information on patent family members

International application No.

**PCT/CN2021/100213**

| Patent document cited in search report | | | Publication date (day/month/year) | Patent family member(s) | | | Publication date (day/month/year) |
|---|---|---|---|---|---|---|---|
| CN | 111092641 | A | 01 May 2020 | None | | | |
| CN | 107769895 | A | 06 March 2018 | CN | 107769895 | B | 31 July 2020 |
| CN | 107332598 | A | 07 November 2017 | CN | 107332598 | B | 16 June 2020 |
| WO | 2021084343 | A1 | 06 May 2021 | None | | | |

Form PCT/ISA/210 (patent family annex) (January 2015)